Europäisches Patentamt

European Patent Office

Office européen des brevets

(19)

(11) Publication number: **0 240 067 B1**

## EUROPEAN PATENT SPECIFICATION

(12)

(45) Date of publication of patent specification: **17.06.92**

(51) Int. Cl.⁵: **A23L 1/222**, A23L 2/28, A23F 3/42, A23F 5/50

(21) Application number: **87200526.9**

(22) Date of filing: **23.03.87**

(54) **Process for the efficient separation and recovery of aroma and flavor volatiles.**

(30) Priority: **31.03.86 US 846641**

(43) Date of publication of application:
**07.10.87 Bulletin 87/41**

(45) Publication of the grant of the patent:
**17.06.92 Bulletin 92/25**

(84) Designated Contracting States:
**AT BE CH DE FR GB GR IT LI NL**

(56) References cited:
**US-A- 2 457 315
US-A- 2 891 865
US-A- 3 248 233
US-A- 4 101 681**

(73) Proprietor: **THE PROCTER & GAMBLE COM-
PANY
One Procter & Gamble Plaza
Cincinnati Ohio 45202(US)**

(72) Inventor: **Strobel, Rudolf G.K.
7305 Thompson Road,
Cincinnati, OH 45247(US)**

(74) Representative: **Suslic, Lydia et al
Procter & Gamble European Technical Cen-
ter N.V. Temselaan 100
B-1853 Strombeek-Bever(BE)**

## Description

TECHNICAL FIELD

This invention relates to an efficient process for separating and recovering aroma and flavor volatiles from fruit or vegetable juices, and an improved processed beverage, made by that process, which is characterized by its retention of more than 75% of the aroma and flavor volatiles originally present in the beverage before processing.

BACKGROUND OF THE INVENTION

Consumption of noncarbonated fruit and vegetable juices has greatly increased since 1950 due to technological breakthroughs in the juice processing and concentration industry. Methods of eliminating sediment, flash pasteurization, concentrating, freeze concentrating, blending, freezing, and drying or crystallization all contributed to this phenomenal growth by providing better quality, better tasting and higher purity juice products.

The challenge of producing beverages which are acceptable to a broad range of consumers involves making a unique product having an acceptable flavor, distinctive aroma, acceptable appearance and satisfactory mouthfeel. The aroma and flavor ingredients in beverages affect each of these characteristics.

During the process of concentrating beverages, especially those involving evaporation, a significant portion of the aroma and flavor volatiles are removed with the water vapors. These volatiles consist of various alcohols, esters, aldehydes, ketones, acids, etc. This loss results in a significant deterioration in quality and overall flavor of the concentrated beverage.

Evaporation processes involve heating the beverage under conditions which promote oxidation of compounds in the beverage. This causes chemical alterations of the aroma and flavor compounds. For instance, lipids can be oxidized and the amino acids and sugars can undergo browning reaction. Such degradation products can cause off flavors in the concentrated beverage. Thus, conventional evaporation processes frequently result in off-flavors and flavor loss in the juice product produced.

Numerous methods have been devised to compensate for the loss of aroma and flavor during evaporation concentration processes. For instance, U.S. Patent 4,463,025, discloses a process for preparing a fruit juice concentrate prepared from natural citrus fruit ingredients. The citrus fruit juice concentrate has at least 35% solids including pulp, non-volatile compounds, pectin and volatile compounds. This citrus fruit juice concentrate has at least 65% of the aroma and flavor volatile compounds of the natural juice.

U.S. Patent 4,374,865, discloses a juice concentrate prepared from natural orange compounds. The orange juice concentrate has at least 35% solids including pulp, non-volatile compounds, pectin and volatile compounds. This orange juice concentrate has at least 65% of the aroma and flavor volatile compounds of the natural juice. The orange juice concentrate is prepared by separating natural orange juice into a pulp portion and a serum portion. The serum portion, which comprises 7% to 20% solids and 80% to 93% water, is concentrated by removing essentially pure water. The concentration step can be accomplished by freeze concentration or by sublimation concentration. When sublimation concentration is used, the pulp does not have to be separated from the serum. Substantially 100% of the non-volatile solids are retained. Moreover, the product is substantially free of oxidative degradation products.

U.S. 3,140,187, discloses a method of minimizing the overall loss of aroma and flavor compounds by collecting "essence" of the juice. Essence is the term applied to the first 15% to 20% of the water which is removed through evaporation and which contains a significant amount of volatile aroma and flavor compounds. The escaping essence is condensed, the aroma and flavor compounds recovered and then added back to concentrated juice.

U.S. Patent 3,118,776, discloses a multi-step process for recovering the volatile flavor fraction from fruit juices at temperatures of less than 48.8°C (120°F). In a closed system, a thin continuous film of citrus juice is distributed over a heat exchange surface at a substantially reduced pressure to partially concentrate the juice by separating it into two components. The minor fraction containing the aroma and flavor volatiles is condensed and removed. After another separation, the remaining mixture is distilled at a temperature below 37.7°C (100°F) and a pressure of less than 1.5" mercury( 5000 Pa)

U.S. Patent 2,641,550, discloses the removal of volatiles from orange juice via heating, evaporating under vacuum or by stripping with an inert gas, e.g., nitrogen. Three condensers are used to condense the vapors. The first-stage condenser is maintained at 32°F (0°C) to -85°F (-65°C); 90% to 98% of the distillate is removed. This first fraction is discarded. The second stage condenser is maintained at 32°F (0°C) to -95°F (-70°C), while the third stage condenser is maintained below -130°F (-90°C). The distillates recovered from the second and third stage condensers are later added to the orange juice concentrate.

Each of these procedures is not totally satisfactory because only a fraction of the escaping aroma and flavor volatile compounds can be collected and recovered. Thus, there is necessarily a significant loss in the overall aroma and flavor of the final concentrated product.

Others have tried different procedures for adding back certain volatile compounds and essences to concentrated beverages to enhance the overall flavor and consumer acceptability of the juice. For example, Ahmed et al., J. Agri. Food Chemistry, 1978, 368-372, describe the addition of certain volatile compounds and essences to juice concentrate after their recovery from the evaporator. The objective was to match the aroma and flavor found in fresh orange juice.

US Patents 2,891,865 and 4,101,681 disclose flavor/essence recovery systems involving flash evaporating under vacuum, and condensation steps.

US Patents 2,457,315 and 3,248,233 disclose similar methods which involve a preheating step.

It is generally recognized that while evaporation concentration processes are useful and fairly effective, there is still a significant loss of aroma and flavor compounds which occurs.

Freeze concentration equipment provides an alternative to the use of evaporators. In freeze concentrators the objective is to remove water in the form of ice crystals without removing significant amounts of aroma and flavor volatiles.

However, while freeze-concentration may be satisfactory to achieve aroma/flavor retention during water removal, it is not a desirable procedure for processing fruit with undesirable aroma and flavor characteristics such as those found in green fruit. Moreover, freeze concentration plants require significantly more capital investment than plants based on evaporation techniques. Also, freeze concentration is limited to concentrations ranging below 50% to about maximum 55%, while evaporative and sublimation procedures achieve maximum concentrations far higher than 55%.

It is an object of the present invention to provide a process for producing a beverage or beverage concentrate which contains at least 75%, and in some instances as much as 90% of the aroma and flavor volatiles originally present. It is a further object of this present invention to provide a process that is capable of removing the undesirable aroma and flavor components from fruit and vegetable juices without attacking the dissolved solids (like sugars, amino acids, vitamins, phenolic materials, etc.) present in the fruit and vegetable juices.

It is a further object of this invention to instantaneously separate the desirable aroma and flavor compounds from fruit and vegetable juices without damaging the dissolved solids and to recapture these aroma and flavor volatiles for addition back to the concentrated fruit and/or vegetable juice.

It is still a further object of this invention to provide a means for pasteurizing a juice beverage before the separation of the aroma and flavor components.

It is also an object of this invention to remove substantially all of the oxygen from a juice beverage in order to prevent flavor degradation due to caramelization of the sugar, browning reactions, and other chemical oxidation reactions of the aroma and flavor volatiles.

These and other objects of this invention will become apparent by the description of the invention below.

DESCRIPTION OF THE FIGURES

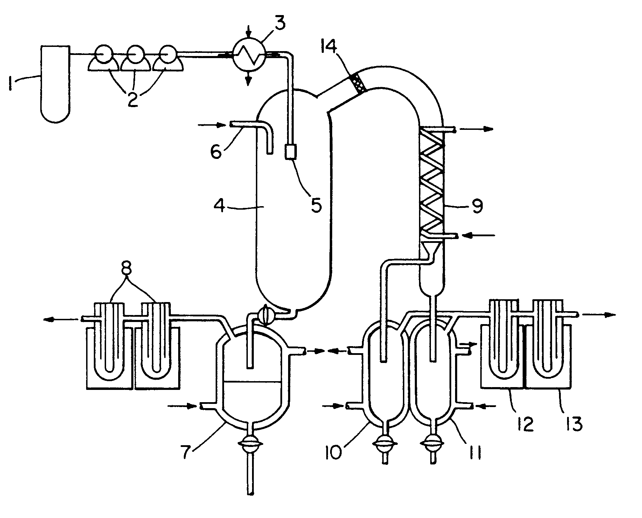

Figure 1 is a diagram of the process described in the present application.

SUMMARY OF THE INVENTION

The present invention relates to a process for separating the aroma and flavor volatiles from a beverage by:

(a) heating a beverage selected from the group consisting of fruit juice, vegetable juice, coffee or tea to a temperature of from 45°C to 110°C for a time of from 3 seconds to about 12 seconds;

(b) dispersing the beverage into droplets ranging in size of from 4 nm (40 angstroms) to 400 nm (4000 angstroms) at a temperature of from 10°C to 30°C and at a pressure of from 5 torr (66 Pa) to 100 torr (1330 Pa) such that a volatile fraction is separated from a dearomatized bottoms fraction; and

(c) recovering said volatile fraction at a temperature of from 0°C to -190°C.

The dearomatized beverage can then be concentrated by any of a number of methods known in the art. The aroma and flavor volatiles can then be blended with the dearomatized concentrate to produce a beverage concentrate. When reconstituted with water, the resulting beverage will contain at least 75% of the aroma and flavor volatiles which were originally present in the beverage before it was processed.

The present invention also relates to a concentrated apple juice beverage made by this process from freshly pressed apple juice. This concentrated apple juice product has an acetate ester: ethanol ratio of from 2:1 to 150:1, a 5-hydroxy methyl furfural level of less than about 1 mg/liter and contains at least 75% of the aroma and flavor volatiles which were present in the freshly pressed apple juice.

The volatiles recovered from one beverage can also be blended with other beverages to produce blended beverage flavors. For example, orange and lemon concentrates and the recovered aroma and flavor volatiles from either or both could be mixed to provide a lemon/orange concentrate.

## DETAILED DESCRIPTION OF THE INVENTION

The process for separating and recovering the fresh aroma and flavor volatiles of beverages is diagrammed in Figure 1.

Any beverage containing aroma and flavor compounds can be processed using this invention. Thus, the process is equally applicable to orange juice, lemon juice, lime juice, grapefruit juice, tangerine juice, kumquat juice, peas juice, peach juice, plum juice, apricose juice, nectarine juice, grape juice, cherry juice, currant juice, raspberry juice, gooseberry juice, blackberry juice, blueberry juice, strawberry juice, potato juice, tomato juice, lettuce juice, celery juice, spinach juice, cabbage juice, watercress juice, dandelion juice, rhubarb juice, carrot juice, beet juice, turnip juice, parsnip juice, cucumber juice, olive juice, pineapple juice, tamarillo juice, custard-apple juice, cocona juice, pomegranate juice, guanabana juice, guava juice, carambola juice, kiwi juice, lulo (quito-orange) juice, mango juice, papaya juice, maracuja juice, banana juice, watermelon juice, cantaloupe juice, pea extract, lentil extract, soybean extract, roasted rye extract, roasted wheat extract, roasted barley extract, roasted coffee extract, roasted chicory extract, green and fermented tea extracts.

This process can also be utilized to remove gaseous antioxidants such as sulfur dioxide in beverages where, for example, the starting fruit or vegetable has been blanched in sulphur dioxide (a preservative).

Additionally, the process of the present invention is useful in eliminating substantially all of the oxygen contained in the aforementioned beverages. If this oxygen is not removed, it will cause enzymatic and non-enzymatic oxidation and/or browning reactions as will be described herein.

Aroma and flavor volatiles are those compounds which partition from the beverage into the headspace above the beverage.

Volatile compounds generally include a low boiling fraction, i.e., a highly volatile fraction, and a high boiling fraction, i.e., a less volatile fraction.

The highly volatile compounds are eluted first from the capillary gas chromatographic column described in detail later. For most fruit juices and especially apple and orange juice, these compounds are characterized by having a boiling point less than 131°C. The highly volatile compounds are generally low molecular weight aldehydes, ketones, alcohols, esters and acids. They also include low molecular weight sulfur compounds (e.g., thiols, sulfides), and low molecular weight nitrogen compounds (e.g., amines, pyrazines, pyridines, etc.). The volatiles include, but are not limited to, acetaldehyde, methanol, ethanol, butanol, hexanal, hexenal, ethyl butyrate, ethyl acetate, propyl acetate, methyl propyl acetate, butyl acetate, methyl butyl acetate, hexyl acetate and acetic acid.

The lesser volatile fraction comprise those compounds which elute after the highly volatile compounds. In apple and orange juice these compounds have a boiling point above 131°C. These lesser volatile compounds include terpenes (e.g. limonene, beta-pinene, alpha-pinene, myrcene), higher molecular weight alcohols (e.g. linalool), esters, aldehydes (e.g. geranial, octanal, and decanal), ketones, ketoacids and oils.

The beverage concentrate composition herein is made from an all-natural product. Although the following description of the process of this invention is described with particular reference to making an apple juice concentrate, it will be understood that the process is not limited thereto. Any beverage containing aroma and flavor volatiles may be used. Thus, the process is equally applicable to other fruit juices, such as citrus juice and grape juice, or vegetable juices, as well as other beverages, such as coffee and tea.

### Extraction of the Beverage

In the case of a beverage such as coffee or tea, extraction is accomplished by running hot water through a bed consisting of ground coffee beans or tea leaves, or done under conditions as disclosed in U.S. Patent 3,717,471. The extracted coffee or tea beverage contains aroma and flavor volatiles which impart the beverages' flavor and aroma.

In the case of a juice, the juice is generally pressed or squeezed from washed fruit. The peel, rag, seeds and large pulp or cellulosic materials are then removed in a finishing step, if necessary. Preferably, this squeezing is accomplished under conditions designed to minimize oxidation such as performing the squeezing in an inert atmosphere. In the case of apples, the apples are thoroughly washed to remove all adhering dirt. Washing may be accomplished by dumping the apples into troughs of moving water, after which they are separated from the water and given a final spray wash. They may also be washed by strong water sprays as they move along a roller-type conveyor. The apples are then sorted by hand to remove all partially or wholly decayed fruit. These decayed apples sometimes contain patulin, a toxin. The inclusion of even a few partially decayed apples can impart a characteristic "rotten apple" flavor to a relatively large volume of juice.

The washed and sorted apples which may consist of the various varieties from North-Central and South America, South Africa, Europe, Eastern Europe, Australia, New Zealand and China, are then prepared for extraction by reducing them to a mash. Preferably, the apples are mashed in an oxygen-restricted atmosphere, that is, where less than about 2% oxygen is present in the atmosphere surrounding the system. Two different pieces of equipment are generally used for this extraction procedure. The first type of mashing apparatus, a Rätz Mühle (manufactured by Lauffer Company, in Horb, Germany), grates the apples to a mash and is most commonly used in Europe. The other type which is most commonly found in North America, is a hammer mill, e.g. Fitzmill[R], (made by Fitzpatrick Company, Elmhurst, Illinois) which smashes and cuts the apple such that it passes through openings of varying sizes as desired. This equipment is fully described in Possman et al., "Processing of Stored Fruit-Technical Concepts and their Costs", Confructa Studien, Vol. 29, November, 1985, pp 136-165.

The most common apparatus for expressing or Separating the juice from non-soluble cell wall or tissue components the juice are 1) hydraulic cider press, 2) pneumatic juice press, 3) continuous screw type press, 4) continuous plate press, 5) semi-continous plate press, 6) horizontal basket press, 8) a screening centrifuge, 7) rack and cloth press, and 9) continous belt press.

If desired, the remaining tissue structures (pomace) can be slurried with water and treated with enzymes for the total liquefication of these remaining solid portions of the apple, such as starch, pectin and proteinaceous cell walls. This liquefied pomace can itself be further processed to extract additional juice by further expression by any of the above methods.

These methods for expressing juice by pressing and enzymatic treatment are more fully described in Nelson et al., Fruit and Vegetable Juice Processing Technology, pp 216-229 (1980).

The preferred method of mashing the apples and removing the juice is the use of a Rätz Mühle to grind the apples and a continuous belt press to express the juice. Most preferred is the use of the Rätz Mühle and continuous belt press under an inert atmosphere. The inert atmosphere can be provided by blanketing the apparatus with nitrogen or another non-reactive, non-oxidative gas such as helium, argon or $CO_2$. In this manner virtually all the oxygen is excluded from the process. This produces a better quality juice and pomace by avoiding or reducing any enzymatic or non-enzymatic oxidation and/or browning reactions between the mash and the atmosphere.

The raw juice from fruits such as oranges, grapefruits and tomatoes, as it comes from the extractor or squeezing process contains pulp and seeds. These are separated from the juice in a "finisher". The finisher contains a screen which removes the pulp and seeds from the juice. The screen opening size can range from 0.1 mm to 2.5 mm. When the screen opening is larger than 2.5 mm, small seeds pass into the juice and contaminate it.

If clear juice is desired, then additional clarification techniques, as known in the art, can be utilized. Examples of such procedures are filtration, precipitation, adsorption and ultrafiltration.

With reference to Figure 1, the expressed juice is then passed through a filter or hermetic centrifuge and deposited into a surge tank (1). This freshly pressed juice is referred to herein as "apple juice". The residence time in the surge tank, which is preferably blanketed in an inert atmosphere, must be kept to a minimum, preferably less than 15 minutes, to avoid any possible enzymatic and non-enzymatic oxidation and/or browning reactions. In order to maintain the quality and freshness of the juice, the temperature in the surge tank is preferably not higher than 25°C. Temperatures much above 25°C can cause the apple juice to brown more rapidly.

Removal of the Volatiles

The fruit juice. vegetable juice, coffee or tea, is pumped (2) at a pressure of from 800 psi to 5000 psi, (5.5 10^6 Pa to 3.5 10^7 Pa) preferably from 3500 psi to 4500 psi, (2.4 10^7 Pa to 3 10^7 Pa) from the surge tank through a heat exchanger (3) and heated to a temperature of from 45°C to 110°C, preferably 75°C to 95°C for a time of from 3 seconds to 12 seconds, preferably 9 seconds to 12 seconds. The juice is distributed into the vacuum chamber (4) having a pressure of from 5 torr (66 Pa) to 100 torr (1330 Pa), preferably 30 torr (400 Pa) to about 40 torr (530 Pa). This distribution can occur by dispensing a stream of the juice into the chamber or by spraying the juice into the chamber. In the preferred embodiment of this invention a stream of juice is accelerated through a nozzle (5) or nozzle system consisting of a plurality of nozzles arranged in such a mode as to permit optimum vapor expansion substantially without liquid droplet collision. This calls preferably for a triangular nozzle cluster arrangement in the horizontal or vertical planes packing mode, into the vacuum chamber such that the juice is atomized into submicron droplets.

While not wishing to be bound by theory, it is believed that when a jet stream of a beverage is accelerated in the nozzle, and enters the vacuum chamber, the juice is dispersed into submicron droplets. Since the droplets contain heat energy added to the system and are dispersed in a vacuum, partial transformation of the liquid phase into a vapor phase occurs. The droplets are believed to have an average diameter ranging from 4 nm (40 angstroms) to 400 nm (4000 angstroms). Breaking the juice into submicrometre droplets greatly increases the surface area, and thus decreasing the diameter area of the droplets to values required for efficient instantaneous, near quantitative transformation of the aroma/flavor compounds from the liquid state to the vapor state without the hindrance of any significant diffusional delay.

It should be noted that apple juice contains small particles consisting of small cell wall fragments. These fragments will pass through the nozzle without adversely affecting the dispersal of the liquid portion of juice.

The nozzle through which the apple juice passes should have an opening of 100 $\mu$m (microns) to 600 $\mu$m (microns), preferably the opening is from 250 $\mu$m (microns) to 400 $\mu$m (microns). The velocity at which the juice travels through the nozzle is 100 m/sec to 300 m/sec, preferably 200 m/sec to 250 m/sec. A multitude of nozzle types can be used. However, it has been found that nozzles with hardened openings are preferred. Such preferred nozzle openings are made of hardened steel or semi-precious and precious stones (rubies, diamonds, sapphires, etc.) of a Mohs Scale hardness grade of 7 or higher. These hardened nozzle openings have been found to erode less rapidly than nozzle openings encased with ordinary steel or brass. Examples of nozzles and method of distributing liquids suitable for use in the present invention are found in Masters, K., Spray Drying Handbook (3rd Ed.), 1972 pp. 165-256,

If desired, from 0.55 MPa - 1.03 MPa (80 to 150 psi) of steam (6) is introduced into the system to add activation energy for phase- or state- transformation to the system. Care must be taken not to add too great a quantity of steam; generally the condensed steam should comprise less than 5% by weight of the juice. Steam can be metered into the column or directly into the juice by a needle-type valve which permits precise steam flow rates into the column.

As discussed above, atomization of the juice greatly increases the surface area/weight ratio of each discrete liquid droplet of the juice to such an extent that the aroma and flavor materials instantaneously vaporize without significant diffusional delay under the pressure and temperature conditions specified. Of course, some of the water also vaporizes, ranging from 2 to 15% of the total starting liquid. This in situ transformation of water into steam aids in the near quantitative removal of the aroma flavor compounds from the submicron liquid droplets. These aroma and flavor components generally constitute less than 0.05% to 14% of the starting materials. Surprisingly, more than 75%, and in some instances as much as 90% or more, of the aroma components are transformed into vapors and are readily separable and therefor recoverable. This novel process provides a surprisingly high separation of aroma components in an instantaneous process without destruction or loss of the volatiles or of the nonvolatiles and without costly multi-stage steam stripping as previously used in the art.

During the process of aroma/flavor vaporization in the vacuum chamber, instantaneous cooling of the heated beverage occurs. The temperature reduction achieved hereby depends on the entrance temperature of the juice into the vacuum chamber and the vacuum in the vacuum chamber. Final temperature in the vacuum chamber ranges from 10°C to 34°C, preferably from 20°C to 26°C.

At the same time this process serves to deoxygenate the beverage. Removal of substantially all the oxygen in the system is essential to avoid oxidative reactions from taking place during the aroma and flavor volatile removal. The aroma and flavor volatile removal step takes place at an elevated temperature which facilitates the undesirable interaction of oxygen with aroma and flavor compounds, and color bodies. In the presence of oxygen and elevated temperatures, the natural color of apple juice turns an unappetizing milky muddy color. As discussed above, the steam which can be optionally introduced would also provide energy to liberate the oxygen which has been adsorbed onto the beverage components which are dissolved or dispersed in the beverage. The oxygen is removed from the system via a vacuum pump and is collected in, for example, a liquid nitrogen trap. Otherwise, the liberated oxygen can be readsorbed onto both dissolved components and particulate components of the juice. Those oxygen molecules which are not collected in the trap are removed from the system and vented into the atmosphere.

The bottoms (7) are pumped from the vaporizer and are either sent directly to an evaporator (8) or other concentration equipment or are cooled and stored prior to evaporation. If the juice is cooled, energy can be saved if the hot juice is used to partially heat the incoming juice. It, in turn, is partially cooled thereby.

Recovery of the Volatiles

The aroma and flavor volatiles are removed from the separation column and preferably passed through a demister (14) which serves to retain any droplets or particles which cannot be atomized and are recovered by, for example, passing through a condenser system (9), ring pump, compression system or other means known in the art for condensing gases, and recovered at temperatures of from 0°C to -190°C. The actual temperature of condensation will depend upon the flow rate of the vapors to be condensed and the heat exchange rate between the coolant and the volatiles within the condensation system. While the majority of the water vapor and some of volatile compounds in apple juice condense around 10°C, condenser temperatures of from -110°C to -76°C are sufficient to condense substantially all of the aroma and flavor volatiles from most fruit and vegetable juices at low pressure.

The more readily condensable fraction (10), and the less condensable fraction (11), are preferably collected separately. The more readily condensable fraction actually consists of water and lower boiling hydrophilic components. The condensation of this fraction occurs in the first condensing system (9) which can consist of, for example, cooling coils cooled via ethylene glycol, to temperatures ranging from -10°C to +15°C. This condensate enters into a trapping system (10) cooled to a temperature ranging from -10°C to -110°C. This can be accomplished by, for example, using liquid Freon$^R$ 11 mixed with solid carbon dioxide. The less readily condensable fraction (11) which consists of mainly higher boiling hydrophobic components and also lower boiling components, is collected at a temperature of from -110°C to -75°C. This insures collection of virtually all the recovered volatiles from the juice.

The noncondensed vapors which remain in the system are finally condensed in one of two remaining tortuous traps (12) and (13). The first trap (12) collects at a temperature of from -110°C to -76°C and contains, for example, liquid Freon$^R$ 11 and $CO_2$. The second trap (13) collects at a temperature of from -195°C to -115°C. This second trap will condense any remaining vapors from the system. Usually liquid air or liquid nitrogen is employed in the final trap (13).

The condensed materials are stored in closed tanks with an inert gas blanket, preferably nitrogen, and are preferably shielded from light to prevent light induced reactions of the aroma and flavor compounds. Relatively little water is contained in the condensates; thus it is not necessary to further separate the aroma and flavor materials from the condensate in rectification columns, as is necessary in the methods of prior art.

The aroma and flavor volatiles which have been removed can be utilized in a variety of ways. If a beverage concentrate is desired, the dearomatized beverage (the bottoms) are concentrated (as discussed below) to from 20° Brix to 80° Brix, and typically from 30% to 100% of the removed volatiles are added to this concentrate. The volatiles may also be blended with other aroma and flavor volatiles for making mixed flavor beverages such as a lemon/lime beverage. A nectar can be produced by mixing the aroma and flavor volatiles with a 1:1 mixture of bottoms fraction and naturally or artifically sweetened water to a concentration of 11° Brix or less if a low calorie beverage is desired. Another use for these separated aroma and flavor volatiles is their addition to carbonated water or soft drink as a natural aroma and flavor ingredient.

Evaporation of the Bottoms

Evaporation can be carried out in evaporators of the ascending or descending film type, in evaporators combining the ascending and descending film feature; in multiple tube evaporators, in plate type evaporators, expanding flow evaporators, and centrifuged evaporators, etc. Such evaporators are described by U. Schobinger and D. Šulc in Handbuch der Getränketechnologie, Frucht-und Gemüsesäfte, Verlag Eugen Ulmer, Stuttgart, Germany (1978), pages 223 to 288.

The dearomatized beverage bottoms are concentrated by conventional evaporation techniques. These bottoms contain low molecular and high molecular weight carbohydrates, vitamins, non-volatile phenolic substances, lipids, metal ions, etc.

Evaporation economically removes water to increase the concentration of the juice to 40° Brix or higher (40% to 75% sugar solids). The juice concentrate can be stored safely at reduced temperatures at these elevated concentrations. In addition, the evaporation step will collect any aroma and flavor materials which were not removed in the separation step. Evaporation should be carried out in a manner that artificial, cooked or manufactured flavors are minimized or totally eliminated.

A multi-stage, multi-effect vacuum evaporator such as the TASTE (thermally accelerated short time evaporator) is used. The temperature profile used in this invention is controlled so that the maximum juice temperature is 40°C to 90°C. A noticeable "cooked" flavor develops in juice concentrate even with the short residence time of these evaporators when the juice exceeds this temperature range. "Cooked" flavors are indicated by the production of 5-hydroxy-methyl furfural which can be readily determined by high pressure liquid chromatography. The evaporators can be operated using either forward flow or mixed flow. The vessel where the steam is flowing is called an effect. The vessel where the juice flows is the stage. Forward flow occurs when the juice is fed to the same vessel as the steam and then follows a path through different vessels in parallel to the vapor flow. Mixed flow occurs when the juice is introduced to one of the intermediate vessels where it is evaporated by vapor generated in a preceding vessel. After partial concentration the juice is then fed to the first vessel where it is evaporated using fresh steam. Evaporation takes place in one or more stages following the feed stage and also following the first effect.

In each case, forward or mixed flow, the steam and the vapor flow in the first effect and in subsequent effects, in the same pattern. The vapor starts at the highest pressure and ends at the stage with the lowest pressure. Any suitable vacuum system can be used to remove non-condensables, but typically this will be a multi-stage steam ejector system. The process is operated at pressures of 2 inches to 4 inches of mercury absolute. (6700 to 13400 Pa)

In a multiple effect evaporator, steam is used only on the first effect and each subsequent effect is heated by vapor evaporated in the preceding stage. This vapor is primarily water but it also contains volatile materials originally in the juice. These volatiles can be recovered by removing part of the vapors from the heating side of the evaporation effect. This removal stream is passed through a series of fractionators, condensers, and coolers to obtain a cold liquid essence rich in volatile fractions. This procedure is commonly practiced in the industry.

Newer types of evaporators such as the narrow bore ascending liquid column evaporator, Sigma Star (available from Schmidt GmbH., Bretten, Germany), are preferably applied. Also, a wiped film evaporator with the condenser built directly into the center of the wiped film evaporator, as in the short path evaporator manufactured by Leybold-Heraeus, Hanau, Germany for oil separation/distillation, is preferably applied.

The evaporator volatiles collected in the process herein are significantly different from the commercial essences since almost all of the volatile materials have previously been removed.

These evaporator volatiles can be added back to the concentrated product in the blend tank. If the water content of the evaporator volatiles is high, or if the evaporator volatiles are to be stored, then it is more economical to concentrate the evaporator volatiles, e.g. by conventional rectification processes.

The evaporated concentrate is cooled and can either be pumped to a blend tank and mixed with other components of the product or further chilled to about -18°C and stored in tanks and drums under an inert gas atmosphere such as nitrogen or carbon dioxide. These storage tanks should be shielded from light to prevent light-induced degradation of the concentrate.

Other means of concentrating the dearomatized juice can be used. These would include reverse osmosis, sublimation concentration, freeze drying or freeze concentration. Economically, however, it is better to use an evaporation technique since the dearomatized juice contains relatively minute quantities of aroma and flavor volatiles and, therefore there is no real need to utilize a method which would retain aroma and flavor volatiles.

Blending

The condensed aroma and flavor volatiles prepared above can be blended in tanks with concentrated dearomatized juice to make a juice concentrate. If a citrus juice concentrate is to be made, pulp can also be added. It has been found that a concentration of pulp in the range of from 5% to 19% (v/v) is an acceptable concentration in a citrus juice concentrate. Preferably, the amount of pulp will be 6% to 12% (volume/volume) having a size of 0.50 mm. to 5 mm.

Packaging

The juice concentrate is then packaged to insure long-term stability, the packaging materials should be impervious to oxygen and damaging light radiation. Optionally, the concentrate can be packed under an inert gas to minimize the oxygen content of any container headspace.

The product is kept at a temperature of 0°C or less during long-term storage. Preferably, it is held at a temperature of from -20°C to -80°C.

Examples of methods of concentrating, blending and packaging juices useful in the present are found in U.S. Patent 4,463,025 and U. S. Patent 4,374,865.

Apple juice Aroma and Flavor Condensates

The natural juice concentrate prepared by the process described above is unique in its retention of at least 75% of the volatile compounds originally present in the starting juice.

Gas chromatographic analysis of the volatile portion of apple juice indicates that there are at least 500 compounds, and probably considerably more, present in the volatile portion of apple juice. Complete identification of all of these volatile compounds has not yet been achieved. The volatile compounds which are believed responsible for the fresh aroma and flavor character of apple juice are composed of carbonyl compounds, acids, esters, terpenes, and other volatile hydrocarbons.

The acetate esters (ethyl acetate, propyl acetate, methyl acetate, methyl propyl acetate, butyl acetate and hexyl acetate) comprise 0.1% up to 80% of the volatile compounds and are partially responsible for the fruity character of apple juice. Their presence alone, however, does not produce the entire apple aroma and flavor. The retention of high levels of the acetate esters, along with the retention of at least 75% of the total volatile compounds, is indicative of the retention of volatile compounds which are present even in very minute amounts, and provides apple juice products which have a flavor and aroma closely approximating that of the natural juice.

It has also been found that freshly pressed natural apple juice contains a relatively low amount of alcohols, particularly ethanol. This composition is maintained in the product made from the process described herein. However, this is not the case in commercial juices prepared by conventional processes. In those juices the alcohol content is strikingly increased, ranging from 45% to 95% of the aroma/flavor volatiles, while the esters, especially acetate esters, are decreased down to 5% to 20% of their original amount.

For those reasons, the acetate esters and ethanol are strong indicators of the differences between natural and processed juices. Fresh natural juices have been found to have an acetate ester/ethanol ratio of from 2:1 to 200:1. The volatile fraction and the juices manufactured by the process of the present invention have an acetate ester: ethanol ratio of from about 2:1 to 150:1, preferably about 5:1 to 150:1 and most preferably 10:1 to 150:1. Juices manufactured by processes known in the prior art have an acetate ester: ethanol ratio of from 0.007:1 to 1.5:1.

In addition to the aforementioned differences the content of 5-hydroxy methyl furfural between the aroma volatiles in the concentrate of this invention and that of commercial juices is also significant. While most commercial juices have significant quantities of 5-hydroxy methyl furfural (HMF), the concentrates of this invention contain merely very small amounts of this compound.

Freshly pressed natural apple juices generally contain from 0.1 mg/liter to 0.8 mg/liter of HMF. Commercial apple juices generally contain from 1.57 mg/liter to 31.78 mg/liter of HMF. The reconstituted apple juice of the present invention has been found to contain less than 1 mg/liter and, more specifically, from 0.26 mg/liter to 1.0 mg/liter. This very low level of HMF indicates the absence of "cooked" flavors (burnt off-notes) in the apple juice of the present invention.

ANALYTICAL PROCEDURES

Gas chromatographic counts are the automatically integrated peak areas of the gas chromatograph recorder. They are directly related to the concentration of each of the compounds present in the volatile mixture.

The method for determining headspace concentrations of volatile compounds according to the present invention is as follows:

1. Equipment and Procedure

A 5 mL aliquot of the beverage is placed in a 65 mL head-space vial with a stir bar, and capped with Mininert[R] sample valve. The headspace vial is equilibrated for 20 minutes at 20°C prior to sampling 1 mL of the headspace using a 1 ml Hamilton gas tight syringe.

The volatile components of the headspace are analyzed using a Hewlett Packard 5880 GC equipped with an injector/trap (see Rodriguez et al., J. Chromatogr., 236 (1982), pp. 36-49) and a 60 m. x 0.25 mm. I.D. thick film (1 μm) J&W DB-1 fused silica column. The temperature program used is 10°C to 220°C at 5°C/minute and holding at that temperature for 5 minutes before ending the run.

## 2. Instrument Calibration and Calculations

In order to calculate the mass of the components in the headspace, two instrument parameters are determined. These are (1) the mass transfer efficiency through the injector/trap and the GC; and (2) the flame ionization detector (FID) response factor.

These measurements are performed using radiolabeled $^{14}$C-decane. The specific activity of the decane is 116 disintegrations per minute per nanogram. The decane is placed in a 65 mL headspace vial with a magnetic stir bar, capped with a Mininert$^R$ valve and stirred for 1 minute at room temperature prior to sampling. Headspace samples are withdrawn using a 1 mL Hamilton gas-tight syringe.

The transfer efficiency is established by counting the ratio of the radioactive mass recovered from the instrument to the radioactive mass injected. A ratio of about 1.00, within experimental error (5%), indicates quantitative transfer of components through the instrument.

The FID response factor is established by calculating the ratio of the FID signal area corresponding to decane (in electronic integrator counts) to the mass of decane injected as determined by the decane specific activity. The response factor is referenced to the actual carbon content of the decane. In addition, the carbon based FID response factor for ethanol is established by the same method to provide quantitation of oxygen containing compounds. The values determined (for the Hewlett Packard GC Integrator System) are 3700 counts/nanogram carbon for decane and 2860 counts/nanogram carbon for ethanol.

## 3. Headspace Concentration Calculations

The quantitative volume/volume concentrations for the identified individual headspace (gas phase) components are then calculated by using the various factors of transferefficiency, FID response and corresponding mass fraction of carbon for the individual component (upon which the FID response is based), and of the molecular weight, according to the following formula:

$$C_{gas} = A_{IC} \times 1/R_F \times 1/F_C \times 1/MW \times 1/V_S \times T \times MV \times 10^9$$

where: $C_{gas}$ = the headspace concentration (v/v) for each compound in ppb;
$A_{IC}$ = area of the chromatographic peak in electronic integrator counts (using flame ionization detection);
$R_F$ = response factor (integrator count/ng carbon) based on response factor for ethanol for oxygen containing compounds or decane for all other compounds;
$F_C$ = the mass fraction of carbon in each compound;
MW = the molecular weight of the compound in nanograms;
$V_S$ = volume of headspace sample (ml.);
T = transfer efficiency (value of 1.0 determined);
MV = molar volume (in ml.) of an ideal gas at 20°C and 1 atmosphere.

To illustrate the calculation of the concentration of ethanol in a headspace sample showing 100 hypothetical area counts, the following calculation is carried out:

$$C \text{ v/v gas} = 100 \times \frac{1}{2960} \times \frac{1}{\frac{24}{46}} \times \frac{1}{46 \times 10^9} \times \frac{1}{1} \times 1.0 \times 24060 \times$$

$$10^9 = 33.868 \text{ ppb ethanol}$$

The area counts and concentrations are presented to three significant figures corresponding to the accuracy of this method (approximately 10%).

The following examples illustrate the methods and compositions of the present invention.

## Example 1

## Part A

453.6 kg of Red Delicious apples having an average diameter of 2.5 to 4.5 (6.35 to 11.45 cm) inches were washed thoroughly. The apples were then inspected to remove those of unsound, i.e., rotten or decayed, composition. The apples were then ground to a mash in a Rätz Mühle Model No. SFR2 to a particle size ranging from 1 mm to 3 mm in average diameter. The apple mash was pressed and then screened with a continuous belt press (Bodenstab; Flottweg Type B-FRU-1000) with a yield of 77% by weight of the starting apples. This amounted to 349.3 kg of apple juice having a concentration of 12.1 Brix.

This freshly pressed apple juice had the following aroma and flavor volatile components as measured by the headspace analysis described above in the Analytical Procedures section:

| Name | Retention Time | Area Counts | Concentration (ppb V/V) |
|---|---|---|---|
| Acetaldehyde | 6.50 | 1825 | 617.781 |
| Ethanol | 8.11 | 423 | 143.219 |
|  | 8.95 | 399 |  |
|  | 12.60 | 351 |  |
|  | 15.40 | 267 |  |
|  | 15.84 | 616 |  |
|  | 16.09 | 694 |  |
|  | 17.94 | 1132 |  |
| 2-Methyl Propyl Acetate | 20.52 | 1183 | 133.490 |
|  | 20.68 | 664 |  |
|  | 21.32 | 323 |  |
| Hexanal | 21.45 | 4519 | 509.969 |
| Ethyl Butyrate | 21.61 | 297 | 33.513 |
| Butyl Acetate | 22.10 | 16247 | 1833.311 |
| Trans-2-Hexenal | 23.51 | 9469 | 1068.198 |
| 2-Methyl Butyl Acetate | 24.78 | 19987 | 1931.544 |
|  | 25.49 | 642 |  |
| Butyl Propionate | 25.85 | 545 | 52.669 |
|  | 26.03 | 818 |  |
|  | 27.47 | 228 |  |
|  | 27.87 | 2591 |  |
| Butyl Butyrate | 29.13 | 796 | 67.350 |
| Hexyl Acetate | 29.69 | 6298 | 532.874 |
|  | 30.91 | 474 |  |
|  | 32.97 | 421 |  |
| Decanal | 36.28 | 496 | 33.544 |
|  | 37.48 | 1052 |  |
|  | 38.24 | 326 |  |
|  | 45.04 | 546 |  |
| Total Area = |  | 73629 |  |

Part B

The juice from Part A was then continuously collected and pumped into a holding tank. From there the juice was continuously pumped via Milton Roy Piston Pumps at a pressure of about 27.6 MPa (4000 psi) through a coil type heat exchanger (to deactivate the enzymes and microorganisms). The residence time in the heat exchanger was 9 seconds. The juice reached a temperature of approximately 90°C. The juice was then exited through a PJ-15 nozzle made of stainless steel with an opening of 360 $\mu$m (microns) at a velocity of 250 m/second into a cylindrical vessel under a vacuum of 20 torr (275 Pa), thereby atomizing the juice into submicron droplets. The juice droplets were instantaneously cooled to a temperature of 24°C due to the consumption of heat occuring during the partial vaporization. The evaporating vapors were then condensed in condensing systems consisting of a series of two coil condensers (cooled with ethylene glycol) at a temperature of -10°C and a series of two condensing vessels (cooled with liquid Freon[R] 11 and dry ice) at a temperature of -110°C, and two tortuous traps (the first one cooled with liquid Freon[R] 11 and dry ice, and the second one with liquid nitrogen) at a temperature of -190°C. The remaining juice (90%) was collected as bottoms in another trap and cooled with ice water. The bottoms fraction, containing all the non-volatile components. e.g., phenols, and low and high molecular carbohydrates, metal ions and phosphates were then concentrated using a modified Leybold-Heraeus short path evaporator (obtained from Leybold-Heraeus GmbH, Hanau, Germany.)

The concentrated dearomatized bottoms were then blended with the entire fraction containing the aroma/flavor volatiles and sufficient water such that the final concentration was 12.1° Brix.

The resulting apple juice beverage had taste and aroma characteristics as good as the freshly pressed juice.

After its reconstitution with water this apple juice manufactured by the process of the present invention had the following gas chromatographic headspace characteristics (as measured by the headspace analysis procedure, described above):

| Name | Retention Time | Area Counts | Concentration (ppb V/V) |
|---|---|---|---|
| Acetaldehyde | 6.43 | 1956 | 662.126 |
| Ethanol | 8.05 | 871 | 294.903 |
| | 8.89 | 571 | |
| | 8.97 | 257 | |
| | 12.57 | 293 | |
| | 15.82 | 639 | |
| | 16.07 | 587 | |
| | 17.93 | 1250 | |
| 2-Methyl Propyl Acetate | 20.51 | 782 | 88.241 |
| | 20.67 | 552 | |
| | 21.31 | 365 | |
| Hexanal | 21.44 | 3627 | 409.307 |
| Ethyl Butyrate | 21.60 | 330 | 37.237 |
| Butyl Acetate | 22.09 | 12491 | 1409.484 |
| Trans-2-Hexenal | 23.51 | 7684 | 866.832 |
| 2-Methyl Butyl Acetate | 24.77 | 14641 | 1414.906 |
| | 25.49 | 472 | |
| Butyl Propionate | 25.85 | 430 | 41.555 |
| | 26.02 | 564 | |
| | 27.87 | 3045 | |
| Butyl Butyrate | 29.13 | 481 | 40.697 |
| Hexyl Acetate | 29.69 | 4621 | 390.983 |
| | 30.42 | 4294 | |
| | 30.91 | 229 | |
| | 32.97 | 559 | |
| Decanal | 36.28 | 837 | 56.606 |
| | 37.48 | 855 | |
| | 38.24 | 292 | |
| | 45.05 | 503 | |
| Total Area = | | 64078 | |

The total area of the finished processed juice divided by the total area of the freshly pressed juice (64078/73629) multiplied by 100 indicates that approximately 87% of the aroma flavor volatiles present in the freshly pressed juice were retained after processing using the present invention. The acetate ester: ethanol ratio of the processed juice of this example (32500:871) = 37.3. The level of 5-hydroxy methyl furfural (HMF) can be determined by using standard high pressure liquid chromatographic techniques. This processed juice would have an HMF level of 0.35 mg/liter.

Example II

Using the gas chromatographic method described above in the Analytical Procedures section, various freshly pressed apple juices, commercial bottled and concentrated frozen apple juices and an apple juice made by the process of the present invention were analyzed. The total area counts for the acetate esters (ethyl acetate, propyl acetate, methyl proply acetate, butyl acetate, methyl butyl acetate and hexyl acetate) and ethanol, as well as the ratio of the acetate esters to ethanol, are presented below:

| Name | Acetate Esters | Ethanol | Ratio |
|---|---|---|---|
| Commercial Bottle A | 6070 | 28700 | .211 |
| Commercial Bottle B | 7570 | 8180 | .925 |
| Commercial Bottle C | 10500 | 65900 | .159 |
| Commercial Bottle D | 6020 | 24600 | .245 |
| Commercial Bottle E | 6520 | 21400 | .305 |
| Commercial Bottle F | 721 | 7830 | .0921 |
| Commercial Bottle G | 3300 | 10200 | .324 |
| Commercial Bottle H | 17100 | 16100 | 1.06 |
| Commercial Bottle I | 6300 | 62200 | .101 |
| Commercial Bottle J | 12700 | 39600 | .321 |
| Commercial Bottle K | 11800 | 15000 | .787 |
| Commercial Bottle L | 10200 | 7570 | 1.35 |
| Commercial Frozen Can 1 | 4130 | 30600 | .135 |
| Commercial Frozen Can 2 | 11200 | 48900 | .229 |
| Commercial Frozen Can 3 | 7740 | 24900 | .311 |
| Commercial Frozen Can 4 | 6160 | 13200 | .467 |
| Commercial Frozen Can 5 | 8450 | 11800 | .716 |
| Commercial Frozen Can 6 | 13800 | 12800 | 1.08 |
| Commercial Frozen Can 7 | 8970 | 23400 | .383 |
| Commercial Frozen Can 8 | 14500 | 33500 | .433 |
| Commercial Aseptic A | 9130 | 53000 | .172 |
| Commercial Aseptic B | 17300 | 38400 | .451 |
| Commercial Aseptic C | 15600 | 45800 | .341 |
| Commercial Aseptic D | 16800 | 57800 | .291 |
| Fresh Pressed A | 101000 | 1070 | 94.4 |
| Fresh Pressed B | 73900 | 415 | 178.0 |
| Fresh Pressed C | 95800 | 1910 | 50.2 |
| Fresh Pressed D | 63300 | 5240 | 12.1 |
| Fresh Pressed E | 85600 | 2680 | 31.9 |
| Fresh Pressed F | 66100 | 2680 | 24.7 |
| Fresh Pressed G | 89300 | 3650 | 24.5 |
| Fresh Pressed H | 73900 | 2610 | 28.3 |
| Fresh Pressed I | 58300 | 5970 | 9.77 |
| Fresh Pressed J | 21000 | 1010 | 20.8 |
| Fresh Pressed K | 30400 | 276 | 110.0 |
| Fresh Pressed L | 38800 | 278 | 140.0 |
| Fresh Pressed M | 2150 | 805 | 2.67 |
| Fresh Pressed N | 22000 | 5580 | 3.94 |
| Fresh Pressed O | 6880 | 1230 | 5.59 |
| Fresh Pressed P | 21600 | 1170 | 18.5 |
| Fresh Pressed Q | 27200 | 404 | 67.3 |
| Fresh Pressed R | 37700 | 330 | 114.0 |
| Fresh Pressed S | 3090 | 911 | 3.39 |
| Fresh Pressed T | 3580 | 1680 | 2.13 |
| Fresh Pressed U | 3480 | 485 | 7.18 |
| Fresh Pressed V | 3770 | 1370 | 2.75 |
| Fresh Pressed W | 3760 | 778 | 4.83 |
| Apple juice of Example I | 32500 | 871 | 37.3 |

Example III

This Example demonstrates the manufacture of a processed orange juice according to the process of the present invention.

60 kg of Valencia oranges are squeezed using conventional extractors and finishing equipment to produce 30 kg of freshly squeezed orange juice with a concentration of approximately 12.2° Brix. The

13

orange juice is centrifuged in a Westphalia Automatic Centrifuge to remove the pulp. The resulting pulp-free serum is heated to a temperature of 50°C and exited through a PJ-10 nozzle with an opening of 360 $\mu$m (microns) at 250 m/second into a vacuum chamber having a pressure of 60 millibars and temperature of 24°C, thereby atomizing the juice into submicrometre droplets. The juice droplets are instantaneously cooled to a temperature of 24°C due to the vapors produced by the evaporation. The remaining juice (approximately 90%) is collected in the bottoms trap and cooled with ice water. The evaporating vapors are then condensed with the same condensing system as described above in Example I. The aroma and flavor volatiles are then blended with the concentrated dearomatized bottoms such that the final concentration of orange juice beverage is 12.2 Brix. The pulp is then added back to amount to a 13% by volume pulp content. The resulting processed orange juice will contain at least 80% of the aroma and flavor volatiles which are present in the original freshly pressed juice.

Substantially similar results are obtained when the freshly pressed orange juice is replaced with the juices and extracts described herein.

Example IV

This Example demonstrates the separation and recovery of aroma and flavor volatile of a coffee beverage.

75 kg of distilled water at a temperature of 100°C are run through 25 kg of a ground blend of 60% by weight Arabica beans and 40% by weight Robusta beans, to yield 50 liters of a coffee extract containing a solids content of 12.2% solids. This coffee extract has a temperature of 100°C. immediately this coffee extract is exited through a nozzle made of sapphire with an opening of 360 $\mu$m (microns) at a velocity of 500 m/second into a cylindrical vessel with a vacuum of 20 torr (275 Pa), thereby atomizing the coffee extract into submicrometre droplets. The juice droplets are instantaneously cooled to a temperature of 24°C due to the vapors produced by the evaporation. The evaporating vapors are then condensed in the same system as described above in Example I. The remaining dearomatized coffee is collected as bottoms in another trap and cooled with ice water. The resulting bottoms fraction will be virtually devoid of aroma. The resulting volatile fraction will contain an intense aroma with the fine aroma characteristics of freshly roasted and ground coffee. The aroma and flavor volatiles can then be added to the bottoms to produce a coffee beverage.

Substantially similar results will be obtained if the ground coffee is replaced with 75 kg of tea leaves of various growing areas such as Sri Lanka, India, China, Kenya, Argentina and Brazil or mixtures thereof.

**Claims**

1. A process for deoxygenating and separating the aroma and flavor volatiles from beverages characterized in that it comprises:
   (a) heating a beverage selected from fruit juice, vegetable juice, coffee, tea, roasted grain and chicory extracts to a temperature of from 45°C to 110°C for a time of from 3 seconds to 12 seconds;
   (b) dispersing said beverage into droplets having a size of from 4 nm (40 angstroms) to 400nm (4000 angstroms) at a temperature of from 10°C to 30°C at a pressure of from 5 torr (66 Pa) to 100 torr (1330 Pa) such that a volatile fraction is separated from a dearomatized bottoms fraction; and
   (c) recovering said volatile fraction at a temperature of from 0°C to -190°C.

2. A process according to Claim 1 wherein the beverage is heated in step (a) to a temperature of from 75°C to 95°C for a time of from 6 seconds to 9 seconds.

3. A process according to Claim 1 or 2 wherein the beverage is dispersed into submicrometre droplets at a temperature of from 20°C to 26°C at a pressure of from 30 torr (400 Pa) to 40 torr.(530 Pa)

4. A process according to any of Claims 1-3 wherein said beverage is dispersed through a nozzle with an opening of from 100 $\mu$m (microns) to 600 $\mu$m (microns), preferably from 250 to 400 $\mu$m (microns).

5. A process according to any of Claims 1-4 wherein said volatiles are recovered by condensation.

6. A process according to any of Claims 1-5 wherein said process is carried out in a oxygen-free environment.

14

7. A process according to any of Claims 1-6 wherein said beverage is a fruit juice, preferably apple juice, orange juice or grapefruit juice.

8. A process according to any of Claims 1-7 wherein said dearomatized bottoms fraction is concentrated to from 20° Brix to 80° Brix, and wherein from 30% to 100% of such volatile fraction is blended into said concentrated dearomatized bottoms fraction thereby producing a beverage concentrate.

**Revendications**

1. Un procédé pour la désoxygénation et la séparation des composés volatils aromatiques et gustatifs des boissons, caractérisé en ce qu'il consiste :

à) à chauffer une boisson choisie parmi les jus de fruits, les jus de légumes, le café, le thé, des extraits de graines et de chicorée torréfiés à une température de 45°C à 110°C pendant une durée de 3 secondes à 12 secondes ;

b) à disperser ladite boisson en gouttelettes d'une taille de 4 nm (40 angströms) à 400 nm (4000 angströms) à une température de 10°C à 30°C sous une pression de 5 torrs (66 Pa) à 100 torrs (1330 Pa) de manière qu'une fraction volatile se sépare d'une fraction de queues désaromatisée et

c) à récupérer ladite fraction volatile à une température de 0°C à -190°C.

2. Procédé selon la revendication 1, dans lequel la boisson est chauffée dans l'étape (a) à une température de 75°C à 95°C pendant une durée de 6 secondes à 9 secondes.

3. Procédé selon la revendication 1 ou 2, dans lequel la boisson est dispersée en gouttelettes submicrométriques à une température de 20°C à 26°C, sous une pression de 30 torrs (400 Pa) à 40 torrs (530 Pa).

4. Procédé selon l'une des revendications 1 à 3, dans lequel ladite boisson est dispersée à travers une buse avec un orifice de 100 μm (microns) à 600 μm (microns), de préférence de 250 à 400 μm (microns).

5. Procédé selon l'une des revendications 1 à 4, dans lequel lesits composés volatils sont récupérés par condensation.

6. Procédé selon l'une des revendications 1 à 5, dans lequel ledit procédé est réalisé dans un environnement exempt d'oxygène.

7. Procédé selon l'une des revendications 1 à 6, dans lequel ladite boisson est un jus de fruits, de préférence du jus de pomme, du jus d'orange ou du jus de pamplemousse.

8. Procédé selon l'une des revendications 1 à 7, dans lequel la fraction de queues désaromatisée est concentrée à partir de 20° Brix jusqu'à 80° Brix et dans lequel 30% à 100% de cette fraction volatile sont incorporés par mélange dans ladite fraction de queues désaromatisée concentrée, en produisant une boisson concentrée.

**Patentansprüche**

1. Ein Verfahren zur Deoxygenierung und Abtrennung von flüchtigen Aroma- und Geschmacksstoffen aus Getränken, gekennzeichnet durch die Schritte:

(a) ein Getränk, ausgwählt aus Fruchtsaft, Gemüsesaft, Kaffee, Tee, gerösteten Körnern und Zichorie-Extrakten auf eine Temperatur von 45°C bis 110°C für 3 bis 12 Sekunden erhitzen,

(b) das Getränk in Tröpfchen einer Größe von 4 nm (40 Angström) bis 400 nm (4000 Angström) bei einer Temperatur von 10°C bis 30°C und einem Druck von 5 Torr (66 Pa) bis 100 Torr (1330 Pa) dispergieren, so daß die flüchtige Fraktion von der dearomatisierten Rückstandsfraktion getrennt wird, und

(c) die flüchtige Fraktion bei einer Temperatur von 0°C bis -190°C wiedergewinnen.

2. Verfahren gemäß Anspruch 1, worin das Getränk gemäß Schritt (a) auf eine Temperatur von 75°C bis 95°C für eine Zeit von 6 Sekunden bis 9 Sekunden erhitzt wird.

**3.** Verfahren gemäß Anspruch 1 oder 2, worin das Getränk in Submikrometer-Tröpfchen bei einer Temperatur von 20°C bis 26°C bei einem Druck von 30 Torr (400 Pa) bis 40 Torr (530 Pa) dispergiert wird.

**4.** Verfahren gemäß einem der Ansprüche 1-3, worin das Getränk durch eine Düse mit einer Öffnung von 100 $\mu$m (Mikron) bis 600 $\mu$m (Mikron), vorzugsweise von 250 bis 400 $\mu$m (Mikron) dispergiert wird.

**5.** Verfahren gemäß einem der Ansprüche 1-4, worin die flüchtigen Stoffe durch Kondensation wiedergewonnen werden.

**6.** Verfahren gemäß einem der Ansprüche 1-5, worin das Verfahren in Sauerstoff-freier Umgebung durchgeführt wird.

**7.** Verfahren gemäß einem der Ansprüche 1-6, worin das Getränk ein Fruchtsaft, vorzugsweise Apfelsaft, Orangensaft oder Grapefruitsaft ist.

**8.** Verfahren gemäß einem der Ansprüche 1-7, worin die dearomatisierte Rückstandsfraktion auf 20° Brix bis 80° Brix konzentriert wird und worin 30% bis 100% der flüchtigen Fraktion in die konzentrierte dearomatisierte Rückstandsfraktion hineingemischt wird, wobei ein Getränkekonzentrat hergestellt wird.